(19) Europäisches Patentamt / European Patent Office / Office européen des brevets

(11) **EP 4 556 193 A1**

(12) **EUROPEAN PATENT APPLICATION**
published in accordance with Art. 153(4) EPC

(43) Date of publication:
**21.05.2025 Bulletin 2025/21**

(21) Application number: **23843017.7**

(22) Date of filing: **19.07.2023**

(51) International Patent Classification (IPC):
**B29C 44/34** (2006.01)   **B29C 33/68** (2006.01)
**B29C 44/14** (2006.01)   **C08G 18/00** (2006.01)
**C08G 18/76** (2006.01)   **B29K 75/00** (2006.01)
**C08G 101/00** (2006.01)

(52) Cooperative Patent Classification (CPC):
**B29C 33/68; B29C 44/14; B29C 44/34;**
**C08G 18/00; C08G 18/76**

(86) International application number:
**PCT/JP2023/026462**

(87) International publication number:
**WO 2024/019094 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.07.2022  JP 2022116993**

(71) Applicant: **Tosoh Corporation
Yamaguchi 746-8501 (JP)**

(72) Inventor: **ISHIBASHI Keita
Ayase-shi, Kanagawa 252-1123 (JP)**

(74) Representative: **Novagraaf International SA
Chemin de l'Echo 3
1213 Onex, Geneva (CH)**

(54) **POLYURETHANE FOAM AND PRODUCTION METHOD THEREFOR**

(57)     There is provided a polyurethane foam, wherein at least one of principal surfaces opposite to each other has a hole opening ratio of 0% to 1.0%, and the principal surface having the hole opening ratio has a root mean square surface roughness of 0.01 to 0.30 $\mu$m in accordance with JIS B 0601:1994, and the polyurethane foam has an air permeability of 0 to 2.0 $cm^3/cm^2$/sec in accordance with JIS K 6400.

*Fig.3*

## Description

### Technical Field

The present invention relates to a polyurethane foam having excellent sound absorption and sound insulation performance, and a production method therefor.

### Background Art

Polyurethane foams are used widely and extensively in daily necessities, automotive interior materials, clothing, sports and leisure goods, medical materials, civil engineering and construction materials, and the like. In such fields of use applications, particularly in a transportation machine such as an automobile or a building such as a house, there is a demand for further reduction of noise by improving the performance of soundproof materials such as a sound absorbing material and a sound insulating material.

In particular, in the field of automobiles, a regulation value for the regulation of noise outside a vehicle is applied. In a situation where the regulation will be strengthened in the future, the reduction of sound in the low and middle frequency ranges (500 to 1,200 Hz), such as transmitted sound from an engine and radiated sound from tires, is an urgent issue, and the need for sound absorbing and sound insulating materials is increasing. In response to these demands, it is possible to relatively easily improve soundproof performance and vibration absorption performance by increasing the thickness of the base material. However, in a case where the base material is thick, there is a concern that a sufficient space cannot be secured in a transportation machine, a building, or the like. As a result, it is necessary to reduce the thickness of the base material while improving the sound absorption and sound insulation performance.

Various efforts have been made in the related art for means for improving the sound absorption and sound insulation performance. For example, Patent Literature 1 and Patent Literature 2 have studied on increasing sound absorption and sound insulation properties by laminating a resin film on a porous material such as a polyurethane foam.

However, in a case where a resin film having high peelability (easy peelability) with respect to a polyurethane foam, such as a polypropylene film or a polyethylene film, is used, the film and the polyurethane foam needs to be superimposed and then pressurized and heated with a hot plate using a mold release paper or the like, thereby being melted and bonded to each other. This causes problems such as an increase in manufacturing cost and an increase in the number of manufacturing steps. In addition, in a case where a resin film such as polyurethane having low peelability with respect to the polyurethane foam is used, it is possible to carry out integral molding in a metal mold (a mold), and thus it is not necessary to carry out melting and bonding. However, it is necessary to dispose the film in the mold each time, and thus as in the case of the film having easy peelability, the manufacturing cost and the number of manufacturing steps increase.

### Citation List

### Patent Literature

[Patent Literature 1] Japanese Unexamined Patent Publication No. 1998-119220
[Patent Literature 2] Japanese Unexamined Patent Publication No. 2005-263118

### Summary of Invention

### Technical Problem

The present invention has been made in consideration of the above-described background art, and an object of the present invention is to provide a polyurethane foam having high soundproof performance particularly in the low and middle frequency ranges even in a case where a foam material has a small thickness in a case of being used as a sound absorbing material or a sound insulating material, and a production method therefor.

### Solution to Problem

The present invention provides [1] to [17].

[1] A polyurethane foam wherein an air permeability measured in accordance with JIS K 6400 is 0 to 2.0 cm$^3$/cm$^2$/sec, a hole opening ratio of a surface of at least any one of upper and lower surfaces with respect to a foaming direction is 0 to 1.0%, and a root mean square surface roughness in a same surface as a surface on which the hole opening ratio is measured, which is described in JIS B 0601:1994, is 0.01 to 0.30 μm.

That is, a polyurethane foam,

wherein at least one of principal surfaces opposite to each other has a hole opening ratio of 0% to 1.0%, and the principal surface having the hole opening ratio has a root mean square surface roughness of 0.01 to 0.30 μm in accordance with JIS B 0601:1994, and the polyurethane foam has an air permeability of 0 to 2.0 cm$^3$/cm$^2$/sec, the air permeability being in accordance with JIS K 6400.

[2] The polyurethane foam according to [1], wherein an Asker C hardness measured in accordance with JIS K 7312 is 20 to 100 points.

[3] The polyurethane foam according to [1] or [2], wherein the polyurethane foam has an average cell diameter of 2,000 μm or more and an area ratio of cells having a diameter of 5,000 μm or more is 20% or more.

[4] The polyurethane foam according to any one of [1] to [3], wherein a thickness of a thinnest portion is 5.0 to 50 mm.

[5] A production method for producing the polyurethane foam according to any one of [1] to [4], wherein a film consisting of a resin having an SP value of 10 or less is disposed in advance on at least any one inner surface of a lower die or an upper die of a mold, and a polyurethane foam is obtained by mold forming, and a polyurethane foam is obtained by peeling off the film from the polyurethane foam.

That is, a production method for producing the polyurethane foam according to any one of [1] to [4], wherein in a state where a film consisting of a resin having an SP value of 10 or less is disposed on at least one inner surface of a pair of dies constituting a mold, the polyurethane foam is molded in the mold, and then the film is peeled off.

[6] The production method for the polyurethane foam according to [5], wherein the resin having an SP value of 10 or less is a polyolefin resin.

[7] The production method for the polyurethane foam according to [5], wherein the resin having an SP value of 10 or less is polyethylene or polypropylene.

[8] The production method according to any one of [5] to [7], wherein a mold release agent having a melting point of 60°C to 100°C is applied between the film and the dies, and the molding in the mold is carried out.

[9] A production method for producing the polyurethane foam according to any one of [1] to [4], wherein a mold release agent having a melting point of 70°C to 90°C is applied onto at least one inner surface of a pair of dies constituting a mold, a film is not disposed on a surface onto which the mold release agent is applied, and then the polyurethane foam is molded in the mold.

[10] The production method for producing the polyurethane foam according to any one of [1] to [4], wherein a film consisting of a resin is disposed in advance on at least any one inner surface of a lower die or an upper die of a mold, and a polyurethane foam is obtained by mold forming.

That is, a production method for producing the polyurethane foam according to any one of [1] to [4], wherein in a state where a film consisting of a resin is disposed on at least one inner surface of a pair of dies constituting a mold, the polyurethane foam is molded in the mold.

[11] The production method according to any one of [5] to [10], wherein a temperature of the pair of dies is set to 30°C to 80°C, and then the polyurethane foam is molded in the mold.

[12] The production method for the polyurethane foam according to any one of [5] to [11], wherein a composition for molding a polyurethane foam having a polyol component (A) and a polyisocyanate component (B) as constitutional components, is reacted and foamed, the polyol component (A) comprises a catalyst (C), a foam stabilizer (D), and a foaming agent (E), at least one of the polyol component (A) or the polyisocyanate component (B) includes an anti-foaming agent (F), and a content of the anti-foaming agent is 0.1% to 7.5% by mass with respect to a total amount of the composition for molding a polyurethane foam.

That is, the production method according to any one of [5] to [11], wherein the polyurethane foam is obtained by reacting and foaming a composition for molding a polyurethane foam having a polyol component (A) and a polyisocyanate component (B) as constitutional components, and the polyol component (A) comprises a catalyst (C), a foam stabilizer (D), and a foaming agent (E), at least one of the polyol component (A) or the polyisocyanate component (B) includes an anti-foaming agent (F), and a content of the anti-foaming agent (F) is 0.1% to 7.5% by mass with respect to a total amount of the composition for molding a polyurethane foam.

[13] The production method for the polyurethane foam according to [12], wherein the anti-foaming agent (F) is a silicone-based oil, and a number average molecular weight of a polysiloxane component included in the silicone-based oil is 10,000 to 50,000.

[14] The production method for the polyurethane foam according to [12] or [13], wherein the anti-foaming agent (F) is included in the polyol component (A).

[15] The production method for the polyurethane foam according to any one of [12] to [14], the production method being a production method for a polyurethane foam, wherein the polyisocyanate component (B) includes 50% to 85% by mass of diphenylmethane diisocyanate, and

a total amount of 2,2'-diphenylmethane diisocyanate and 2,4'-diphenylmethane diisocyanate included in the diphenylmethane diisocyanate is 10% to 50% by mass with respect to a total amount of the diphenylmethane diisocyanate.

[16] The production method for the polyurethane foam according to any one of [12] to [15], wherein the polyurethane foam to be obtained, has an average cell diameter of 2,000 $\mu$m or more and an area ratio of cells having a diameter of 5,000 $\mu$m or more is 20% or more.

[17] The production method for the polyurethane foam according to any one of [12] to [16], wherein in the polyurethane foam, a thickness of a thinnest portion is 5.0 to 50 mm.

## Advantageous Effects of Invention

By using the polyurethane foam according to the present invention, a foam material can have a small thickness as a sound absorbing material or a sound insulating material, and high soundproof performance can be provided particularly in the low and middle frequency ranges.

## Brief Description of Drawings

Fig. 1 is a perspective view of a polyurethane foam 1 according to the present embodiment.

Fig. 2 shows cross-sectional views of the polyurethane foam 1 taken along a line II-II of Fig. 1, where Fig. 2(a) is a cross-sectional view of the polyurethane foam 1 according to the first embodiment, which is taken along the line II-II of Fig. 1, Fig. 2(b) is a cross-sectional view of the polyurethane foam 1 according to the second embodiment, which is taken along the line II-II of Fig. 1, and Fig. 2(c) is a cross-sectional view of the polyurethane foam 1 according to the third embodiment, which is taken along the line II-II of Fig. 1.

Fig. 3 is an optical photomicrographic image of a surface of a polyurethane foam of Example 1.

Fig. 4 is an optical photomicrographic image of a surface of a polyurethane foam of Example 2.

Fig. 5 is an optical photomicrographic image of a surface of a polyurethane foam of Example 7.

Fig. 6 is an optical photomicrographic image of a surface of a polyurethane foam of Example 8.

Fig. 7 is an optical photomicrographic image of a surface of a polyurethane foam of Example 9.

Fig. 8 is an optical photomicrographic image of a surface of a polyurethane foam of Comparative Example 1.

Fig. 9 is an optical photomicrographic image of a surface of a polyurethane foam of Comparative Example 3.

Fig. 10 is an optical photomicrographic image of a surface of a polyurethane foam of Comparative Example 4.

## Description of Embodiments

Hereinafter, embodiments will be described in detail with reference to the drawings. It is noted that in each drawing, identical or corresponding portions are denoted by the same reference numerals, and overlapping description is omitted. In addition, the dimensional ratios in the drawings are not limited to the illustrated ratios.

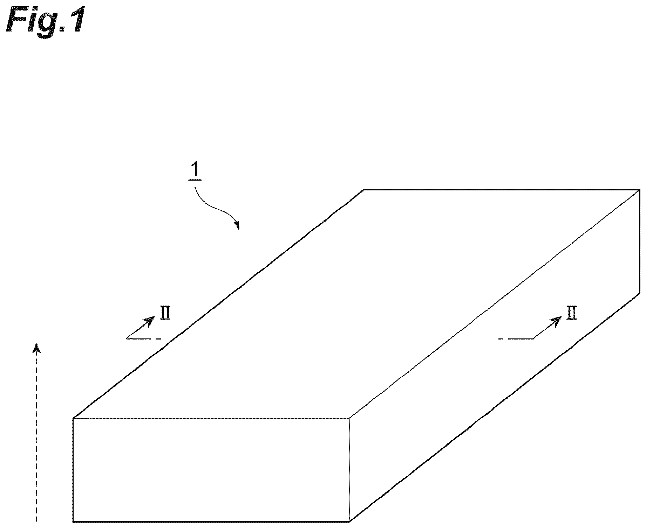

Fig. 1 is a perspective view of a polyurethane foam 1 according to the present embodiment. The polyurethane foam 1 shown in Fig. 1 has a plate shape as a whole, and at least one of principal surfaces opposite to each other, that is, one of an upper surface or a lower surface of the polyurethane foam 1 has a hole opening ratio of 0% to 1.0%. A root mean square surface roughness of the principal surface having this hole opening ratio, that is, a root mean square surface roughness of the upper surface or the lower surface having a hole opening ratio of 0% to 1.0% is 0.01 to 0.30 $\mu$m, where the root mean square surface roughness is in accordance with JIS B 0601:1994. It is noted that the shape of the polyurethane foam is not limited to a plate shape (also referred to as a block shape or a panel shape), and the polyurethane foam may have any shape (for example, a cylindrical shape) having principal surfaces opposite to each other. The principal surface does not need to be flat, and it may be curved or may be formed to have unevenness.

The hole opening ratio is 0% to 1.0%. However, the hole opening ratio may be 0% to 0.6% or may be 0% to 0.5%. The root mean square surface roughness is 0.01 to 0.30 $\mu$m; however, the root mean square surface roughness may be 0.02 to 0.30 $\mu$m or may be 0.05 to 0.30 $\mu$m. In a case where each of the hole opening ratio and the root mean square surface roughness is equal to or smaller than the above-described upper limit, the polyurethane foam 1 exhibits an excellent sound absorption and sound insulation effect in the low and middle frequency ranges.

A broken line arrow showing the thickness direction of the polyurethane foam 1 in Fig. 1 indicates the foaming direction of the polyurethane foam 1. The polyurethane foam 1 can be produced by reacting and foaming a composition for molding a polyurethane foam, where a direction in which the thickness increases in a case where the composition for forming a polyurethane foam is formed in a molding device (a mold or the like) is the foaming direction. In general, a formed foam (cell) has a shape extending in the thickness direction (for example, a spindle shape). Therefore, the foaming direction can also be determined from the shape thereof.

The polyurethane foam 1 has an air permeability of 0 to 2.0 $cm^3/cm^2/sec$, where the air permeability is in accordance with JIS K 6400. That is, the above-described air permeability that is measured in a direction of a broken line arrow in Fig. 1 is 0 to 2.0 $cm^3/cm^2/sec$. The air permeability may be 0 to 1.5 $cm^3/cm^2/sec$. In a case where the air permeability is set to be equal to or smaller than the above-described upper limit, it is possible to obtain sufficient sound insulation properties in the low and middle frequency range.

In the polyurethane foam 1, it is preferable that in a vertical incident sound absorption coefficient measuring method in accordance with JIS A 1405-2: 2007, a sound absorption coefficient at 800 Hz is 0.4 or more under sample conditions of a diameter of 100 mm and a thickness of 10 mm, and in a vertical incident sound transmission loss measurement in accordance with AST M E2611, a simple average value of transmission losses at 800 to 1,250 Hz is 15 dB or more under sample conditions of a diameter of 100 mm and a thickness of 10 mm. The sound insulation performance can be evaluated by measuring a vertical incident sound transmission loss measurement, and the simple average value of the transmission loss at 800 to 1,250 Hz means a simple average value of the vertical incident transmission losses at 800 Hz, 1,000 Hz, and 1,250 Hz.

The polyurethane foam 1 may be a flexible polyurethane foam, a semi-rigid polyurethane foam, or a rigid polyurethane foam.

The flexible polyurethane foam refers to a reversibly deformable foam having an open cell structure and exhibiting high air permeability [for example, see Gunter Oertel, "Polyurethane Handbook" (1985 edition), HANSER Publisher (Germany), pp. 161 to 233, and Keiji Iwata, "Polyurethane Resin Handbook" (1987, first edition), NIKKAN KOGYO SHIMBUN, LTD., pp. 150 to 221].

The physical properties of the flexible polyurethane foam vary depending on a chemical structure of a polyol, an isocyanate, or the like which is used for producing the flexible polyurethane foam, a chemical factor such as a blending amount of a foaming agent or an isocyanate index, a cell structure, and the like, and thus it is difficult to particularly specify the physical properties thereof. However, in general, the density (which can be measured as an apparent density, the same applies hereinafter) is in a range of 10 to 100 $kg/m^3$ (JIS K 6401), the compression strength (ILD 25%) is in a range of 2 to 80 kgf (20 to 800 N) (JIS K 6401), and the elongation rate is in a range of 80% to 500% (JIS K 6301) [for example, see Gunter Oertel, "Polyurethane Handbook" (1985 edition), HANSER Publisher (Germany), pp. 184 to 191 and 212 to 218, and Keiji Iwata, "Polyurethane Resin Handbook" (1987, first edition), NIKKAN KOGYO SHIMBUN, LTD., pp. 160 to 166 and pp. 186 to 191].

The semi-rigid polyurethane foam is a reversibly deformable foam having an open cell structure and high air permeability, similarly to the flexible polyurethane foam, although the foam density and the compression strength are higher than those of the flexible polyurethane foam. In addition, the raw materials used for producing the semi-rigid polyurethane foam, such as a polyol, an isocyanate, and the like, are the same as those of the flexible polyurethane foam. Therefore, the semi-rigid polyurethane foam is generally classified as the flexible polyurethane foam in many cases [for example, see Gunter Oertel, "Polyurethane Handbook" (1985 edition), HANSER Publisher (Germany), pp. 223 to 233, and Keiji Iwata, "Polyurethane Resin Handbook" (1987, first edition), NIKKAN KOGYO SHIMBUN, LTD., pp. 211 to 221]. The physical properties of the semi-rigid polyurethane foam are not particularly limited; however, in general, the density is generally in a range of 40 to 800 $kg/m^3$, the 25% compression strength is in a range of 0.1 to 2 $kgf/cm^2$ (9.8 to 200 kPa), and the elongation rate is in a range of 40% to 200%.

The rigid polyurethane foam is a foam that has a highly crosslinked closed cell structure and is not reversibly deformable, and it has properties completely different from those of the flexible polyurethane foam and the semi-rigid polyurethane foam [for example, see Gunter Oertel, "Polyurethane Handbook" (1985 edition), HANSER Publisher (Germany), pp. 234 to 313, and Keiji Iwata, "Polyurethane Resin Handbook" (1987, first edition), NIKKAN KOGYO SHIMBUN, LTD., pp. 224 to 283]. The properties of the rigid foam are not particularly limited. However, in general, the density is in a range of 20 to 100 $kg/m^3$, and the compression strength is in a range of 0.5 to 10 $kgf/cm^2$ (50 to 1,000 kPa).

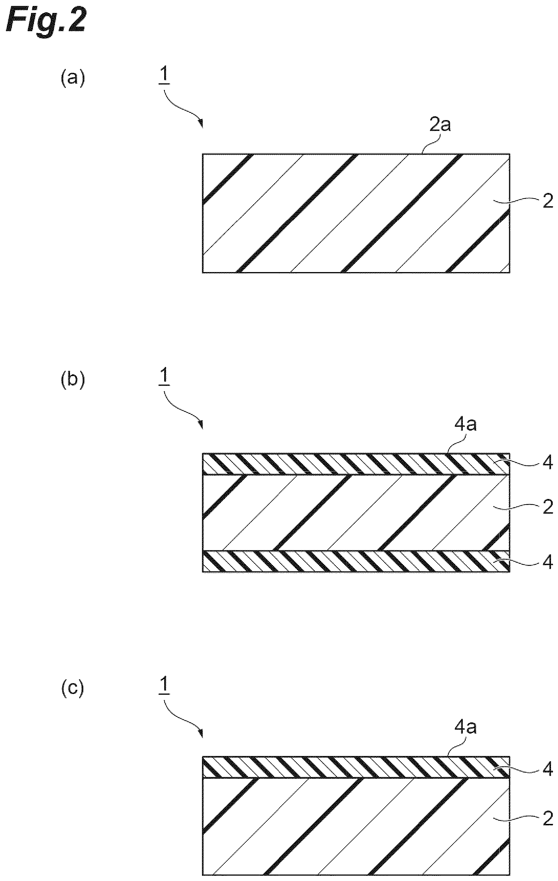

Fig. 2 shows cross-sectional views taken along a line II-II of Fig. 1, where Fig. 2(a) is a cross-sectional view of the polyurethane foam 1 according to the first embodiment, Fig. 2(b) is a cross-sectional view of the polyurethane foam 1 according to the second embodiment, and Fig. 2(c) is a cross-sectional view of the polyurethane foam 1 according to the third embodiment.

A polyurethane foam 1 according to a first embodiment, which shown in Fig. 2(a), is composed of a polyurethane foam main body 2, and a principal surface 2a of the polyurethane foam main body 2 has a hole opening ratio of 0% to 1.0% and a root mean square surface roughness of 0.01 to 0.30 $\mu$m, the root mean square surface roughness being in accordance with JIS B 0601:1994.

The polyurethane foam 1 according to the first embodiment can be produced by a production method wherein a polyurethane foam is molded in a mold in a state where a film consisting of a resin having an SP value of 10 or less is disposed on each of inner surfaces of a pair of dies constituting a mold, and then the film is peeled off, or by a production method wherein a mold release agent having a melting point of 70°C to 90°C is applied onto inner surfaces of a pair of dies constituting a mold, and then the polyurethane foam is molded in the mold (in this case, the film is not interposed between the polyurethane foam to be molded in the mold and the mold release agent).

In a case of being based on the above-described production method, the surface of the polyurethane foam can take on a form as if a film is laminated thereon. That is, on the surface of the polyurethane foam 1 after peeling off the film consisting of a resin having an SP value of 10 or less and on the surface of the polyurethane foam 1 obtained through a mold release agent of 70°C to 90°C, a dense layer (foam skin layer) in which the degree of foaming is extremely suppressed is formed.

The polyurethane foam 1 according to a second embodiment, which is shown in Fig. 2(b) is composed of the polyurethane foam main body 2 and films 4 respectively laminated on an upper surface and a lower surface of the polyurethane foam main body 2. A principal surface 4a of the polyurethane foam 1 has a hole opening ratio of 0% to 1.0% and a root mean square surface roughness of 0.01 to 0.30 $\mu$m, the root mean square surface roughness being in accordance with JIS B 0601:1994.

As a film, which is composed of a resin film and does not have a hole penetrating (is not perforated) in the thickness direction, is used as the film 4. In the second embodiment, the film 4 may be a resin film consisting of a resin having a solubility parameter (SP value) of more than 10 (sometimes may be referred to as a "polar film"). The films 4 on the upper and lower surfaces may be films of the same kind or films of kinds different from each other.

The SP value is determined by a publicly known method that is used as a method for calculating the SP value of a polymer. Examples thereof include a method of determining the SP value from the solubility in a solvent having a known SP value (G. Gee, Trans. Inst. Rubber Ind, 18, 266 (1943)), a method of determining the SP value from the osmotic pressure of a polymer solution (R. F. Fedors, Polym. Eng. Sci, 14(2), pl47, p472 (1974)), a method of determining the SP value from the degree of swelling (M. B. Huglin, D. J. Pass, J. Appl. Polym. Sci, 12, 473 (1968), L. A. Errede, Macromolecules 19, 1522 (1986)), and a method of determining the SP value from the change in turbidity in a case where a poor solvent is added to a polymer solution (K. W. Suh, J. M. Corbett, J. Appl. Polym. Sci, 12, 2359 (1968)). In General, the SP values do not differ much depending on the measuring method and the calculation method; however, in a case where the SP values differ, the average value from available data can be adopted. It is noted that in a case where the SP values are compared, it is preferable to adopt the same measuring method and calculation method.

The polyurethane foam 1 according to the second embodiment can be produced by a production method the polyurethane foam is molded in the mold in a state where a film consisting of a resin having an SP value more than 10 is disposed on each of inner surfaces of a pair of dies constituting a mold.

The polyurethane foam 1 according to a third embodiment, which is shown in Fig. 2(c) is composed of the polyurethane foam main body 2 and the film 4 is laminated on the upper surface of the polyurethane foam main body 2. A principal surface 4a of the polyurethane foam 1 has a hole opening ratio of 0% to 1.0% and a root mean square surface roughness of 0.01 to 0.30 $\mu$m, the root mean square surface roughness being in accordance with JIS B 0601:1994. In the polyurethane foam 1 according to the third embodiment, the foam skin layer may be formed or may not be formed on an opposite surface opposite to the principal surface 4a.

The polyurethane foam 1 according to the third embodiment can be produced by disposing a film consisting of a resin having an SP value more than 10 on one inner surface of a pair of dies constituting a mold and then molding the polyurethane foam in the mold. In a case of forming a foam skin layer on a surface of polyurethane foam on a side opposite to a side on which a film is disposed, it is possible to adopt (1) a method in which the polyurethane foam is molded in the mold in a state where a film consisting of a resin having an SP value of 10 or less is disposed on the other inner surface, and then the film consisting of a resin having an SP value of 10 or less is peeled off, and (2) a method in which a mold release agent having a melting point of 70°C to 90°C is applied onto the other inner surface and the polyurethane foam is molded in the mold without interposing a film.

In a case of forming no foam skin layer on a surface of polyurethane foam on a side opposite to a side on which a film is disposed, a method other than the above-described (1) or (2) (for example, a method of applying a mold release agent having a melting point outside a range of 70°C to 90°C onto the other inner surface) may be adopted.

It is noted that the air permeability of any of the polyurethane foams according to the first, second, and third embodiments in accordance with JIS K 6400 is 0 to 2.0 $cm^3/cm^2$/sec.

Hereinafter, detailed descriptions will be made regarding a composition for molding a polyurethane foam, which is for producing the polyurethane foam 1, and a production method using this composition.

The polyurethane foam 1 can be obtained by reacting and foaming a composition for molding a polyurethane foam, which contains a polyol component (A), a polyisocyanate component (B), a catalyst (C), a foam stabilizer (D), a foaming agent (E), and an anti-foaming agent (F), which will be described later.

The polyol component (A) is a component that forms polyurethane by undergoing polyaddition with the polyisocyanate component (B), and it is preferably at least one selected from the group consisting of a polyether polyol and a polyester polyol. Further, the number average molecular weight thereof is preferably 1,000 to 10,000, more preferably 3,000 to 8,000, and most preferably 4,000 to 8,000. In addition, it is more preferably a compound in which the nominal number of functional groups is 2 or more.

In a case where the number average molecular weight is equal to or smaller than the lower limit, the flexibility of the foam to be obtained is likely to be insufficient, and in a case where the number average molecular weight exceeds the upper limit, the hardness of the foam is likely to be reduced. In addition, in a case where the nominal number of functional groups is less than 2, there is a problem in that the rebound elastic modulus of the foam is significantly reduced and the foam does not return to the original shape in a case where the foam is compressed. It is noted that the nominal number of functional groups indicates a theoretical average number of functional groups (the number of active hydrogen atoms per molecule) in a case where it is assumed that a side reaction does not occur during the polymerization reaction of the polyol.

As the polyether polyol, for example, a polypropylene ether polyol, a polyethylene polypropylene ether polyol (hereinafter, referred to as PPG), polytetramethylene ether glycol (hereinafter, referred to as PTG), or the like can be used, and as the polyester polyol, for example, a polyester polyol consisting of adipic acid and a diol, which is a polycondensation type polyester-based polyol, a polycaprolactone polyol of a lactone-based polyester polyol, or the like can be used.

From the viewpoint of improving the heat resistance of the foam, at least one polyol selected from the group consisting of a castor oil and a castor oil-modified polyol can be used in combination in the polyol component (A). Examples of at least one polyol selected from the group consisting of a castor oil and a castor oil-modified polyol include a purified castor oil, a semi-purified castor oil, an unpurified castor oil, and derivatives of castor oils such as a hydrogenated castor oil to which hydrogen has been added.

In addition, it is preferable that the polyol component (A) contains a polyether polyol having a polyoxyalkylene chain consisting of a copolymer of oxyethylene and oxypropylene for the intended purpose of promoting the communication of the polyurethane foam. The number average molecular weight thereof is preferably 3,000 to 8,000, and the nominal number of functional groups thereof is preferably 2 to 4. Further, the oxyethylene unit in the polyether polyol is preferably 60% to 90% by mass, and more preferably 60% to 80% by mass.

In a case where the content of the oxyethylene unit is set to 60% to 90% by mass, the durability of the foam can be improved. In addition, from the viewpoint of storage stability at a low temperature, the copolymer consisting of oxyethylene and oxypropylene is preferably a random copolymer.

The adding amount of the polyether polyol is preferably 0.5% to 5.0% by mass with respect to the polyol component (A). In a case where the adding amount is equal to or smaller than the lower limit value, there is a concern that the moldability of the foam deteriorates, and in a case where the adding amount exceeds the upper limit value, there is a concern that the elongation rate of the foam decreases.

As the polyol component (A), a polymer polyol obtained by polymerizing a vinyl-based monomer in a polyol according to a conventional method can be used in combination for the intended purpose of adjusting hardness. Examples of such a polymer polyol include those obtained by polymerizing, in a polyalkylene polyol such as PPG, a vinyl-based monomer in the presence of a radical initiator and stably dispersing the resultant polymer.

Examples of the vinyl-based monomer include acrylonitrile, styrene, vinylidene chloride, hydroxyalkyl methacrylate, and alkyl methacrylate, among which acrylonitrile or styrene is preferable. Examples of such a polymer polyol include EL-910 and EL-923, which are manufactured by AGC Inc., and FA-728R manufactured by Sanyo Chemical Industries, Ltd.

For the polyisocyanate component (B), it is preferable to use, as an isocyanate source, a diphenylmethane diisocyanate (hereinafter, MDI) such as 4,4'-diphenylmethane diisocyanate (hereinafter, 4,4'-MDI), 2,4'-diphenylmethane diisocyanate (hereinafter, 2,4'-MDI), or 2,2'-diphenylmethane diisocyanate (hereinafter, 2,2'-MDI), or a polyphenylene polymethylene polyisocyanate (hereinafter, P-MDI). In the present invention, the above-described MDI, a mixture of MDI and P-MDI, various modified products such as a urethane modified product, a urea modified product, an allophanate modified product, a nurate modified product, and a biuret modified product can also be used.

The MDI content of the polyisocyanate component (B) is preferably in a range of 50% to 85% by mass. In a case where the MDI content is more than 85% by mass, there is a concern that the storage stability of the obtained polyisocyanate composition at a low temperature or the durability of the obtained foam may be decreased. On the other hand, in a case where the MDI content is less than 50% by mass, there is a concern that the elongation of the polyurethane foam may be decreased in association with an increase in the crosslinking density, and it may be difficult to obtain sufficient foam hardness.

Further, the total of the content of 2,2'-MDI and the content of 2,4'-MDI with respect to the total amount of MDI (hereinafter, an isomer content) is preferably 10% to 50% by mass.

In a case where the content of 2,2'-MDI and 2,4'-MDI with respect to the total amount of MDI is less than 10% by mass, there is a concern that the storage stability of the obtained polyisocyanate composition at a low temperature may be impaired, and thus it may be necessary to heat an isocyanate storage place, a pipe, and a foam molding machine at all times. In addition, there is a concern that the molding stability of the polyurethane foam may be impaired, and foam collapse or the like may occur during foaming. On the other hand, in a case where the content thereof exceeds 50% by mass, there is a concern that the following problems may occur; for example, the reactivity is decreased, the molding cycle is extended, the closed cell ratio of the foam increases, and shrinking occurs after molding.

As the catalyst (C), various urethane catalysts publicly known in the related art can be used, and examples thereof also include triethylamine, tripropylamine, tributylamine, N-methylmorpholine, N-ethylmorpholine, dimethylbenzylamine, N,N,N',N'-tetramethylhexamethylenediamine, N,N,N',N',N"-pentamethyldiethylenetriamine, bis-(2-dimethylaminoethyl)ether, triethylenediamine, 1,8-diaza-bicyclo[5.4.0]undecene-7, 1,2-dimethylimidazole, dimethylethanolamine, N,N-dimethyl-N-hexanolamine, and organic acid salts thereof, as well as an organometallic compound such as stannous octoate and zinc naphthenate. In addition, an amine catalyst having active hydrogen, such as N,N-dimethylethanolamine or N,N-diethylethanolamine, is also preferable.

The adding amount of the catalyst is preferably 0.01% to 10% by mass with respect to the polyol component (A). In a case where the adding amount thereof is equal to or smaller than the lower limit value, there is a concern that curing is likely to be insufficient, and in a case where the adding amount thereof exceeds the upper limit value, there is a concern that moldability may deteriorate.

As the foam stabilizer (D), a general surfactant can be used, and a silicone-based surfactant can be suitably used. Examples thereof include SZ-1327, SZ-1325, SZ-1336, and SZ-3601, which are manufactured by Dow Toray Co., Ltd., Y-10366J and L-5309J, which are manufactured by Momentive Inc., and B-8724LF2 and B-8715LF2, which are manufactured by Evonik Industries AG. The adding amount of these foam stabilizers is preferably 0.1% to 3.0% by mass with respect to the polyol component (A).

As the foaming agent (E), water is mainly used. Water reacts with an isocyanate group to form a urea group having high hardness and also generates carbon dioxide, which allows foaming to occur. In addition, any foaming agent may be used in addition to water. For example, a small amount of a low-boiling point organic compound such as cyclopentane or isopentane may be used in combination, or air, nitrogen gas, or liquefied carbon dioxide can be mixed and dissolved in the stock solution using a gas loading device, thereby carrying out foaming.

The adding amount of the foaming agent is usually 0.5% to 10% by mass with respect to the polyol composition; however, the adding amount is preferably 4.0% to 7.0% by mass and more preferably 4.0% to 6.5% by mass in a case of obtaining a low density polyurethane foam having an apparent density of 25 $kg/m^3$. In a case where the adding amount thereof exceeds the upper limit, there is a concern that foaming may not be stable, and in a case where the adding amount thereof is equal to or smaller than the lower limit, there is a concern that the density of the foaming agent may not be sufficiently lowered.

The anti-foaming agent (F) is used for the intended purpose of coarsening the cells of the polyurethane foam. In a case of coarsening the cells, it is possible to exhibit a resonator type sound absorbing mechanism in the polyurethane foam, which makes it possible to enhance the sound absorption and sound insulation effects at the specific frequency. Examples of the component of the anti-foaming agent (F) include anti-foaming agents such as a silicone-based anti-foaming agent, an oil and fat-based anti-foaming agent, a fatty acid-based anti-foaming agent, a fatty acid ester-based anti-foaming agent, and a phosphoric acid ester-based anti-foaming agent, and a modified product obtained by modifying a part of the structure of these anti-foaming agents. Only one kind thereof may be contained, or two or more kinds thereof may be contained.

In a case where two or more kinds thereof are contained, any combination of anti-foaming agent components of a silicone-based anti-foaming agent, an alcohol-based anti-foaming agent, an ether-based anti-foaming agent, a polyol-based anti-foaming agent, a metal soap-based anti-foaming agent, a nonionic surfactant-based anti-foaming agent, an oil and fat-based anti-foaming agent, a fatty acid-based anti-foaming agent, a fatty acid ester-based anti-foaming agent, and a phosphoric acid ester-based anti-foaming agent may be used. In addition, the anti-foaming agent component is particularly preferably a silicone-based anti-foaming agent.

Examples of the silicone-based anti-foaming agent include anti-foaming agents of an oil type, an oil compound type, a solution type, an emulsion type, a self-emulsifying type, and a powder type, and where all of these can be suitably used. The silicone-based anti-foaming agent has a polysiloxane structure as in the case of the silicone-based foam stabilizer described above; however, it is different in that the polysiloxane chain is relatively long in order to exhibit foamability, and the insolubility in the polyol component (A) or the polyisocyanate component (B) is high. The number average molecular weight of the polysiloxane component is preferably 10,000 to 50,000 and more preferably 10,000 to 30,000. In a case where the number average molecular weight is less than 10,000, there is a concern that the foaming effect is difficult to obtain, and in a case where the number average molecular weight exceeds the upper limit, there is a concern that the dispersibility of the anti-foaming agent decreases and thus separation occurs.

Examples of the silicone-based anti-foaming agent include a dimethyl silicone oil [$(CH_3)_3Si$-[$OSi(CH_3)_2$]n-O-$Si(CH_3)_3$], a methylphenyl silicone oil [$(CH_3)_3Si$-[$OSi(CH_3)_2$]m-[$OSi(CH_3)(C_6H_5)$]nO-$Si(CH_3)_3$, $(CH_3)_3Si$-[$OSi(CH_3)_2$]m-[$OSi(C_6H_5)_2$]n-O-$Si(CH_3)_3$, or the like], and a methyl hydrodiene silicone oil [$(CH_3)_3Si$-[$OSi(CH_3)_2$]m-[$OSi(CH_3)(H)$]n-O-$Si(CH_3)_3$.or the like].

The content of the anti-foaming agent (F) is preferably 0.1% to 7.5% by mass, and more preferably 0.1% to 7.0% by mass with respect to the total amount of the composition for molding a polyurethane foam. In a case where the content is less than 0.1% by mass, there is a concern that the coarsening of the cell is insufficient and thus sufficient sound absorption properties cannot be obtained, and in a case where the content is more than 7.5% by mass, there is a concern that foaming is difficult to be stabilized.

In the composition for molding a polyurethane foam, it is possible to use, as necessary, a filler such as calcium carbonate or barium sulfate, publicly known various additives such as a flame retardant, a plasticizer, a coloring agent, an antifungal agent, and an auxiliary agent.

The polyurethane foams according to the first embodiment, the second embodiment, and the third embodiment can be produced by the above-described method. In a case where the polyurethane foam according to the first embodiment is produced using a film consisting of a resin having an SP value of 10 or less, and in a case where the polyurethane foam according to the second embodiment is produced using a film consisting of a resin having an SP value of more than 10, a mold release agent having a melting point of 60°C to 100°C can be applied between the film and the die. In addition, in the production method for the polyurethane foam according to the third embodiment, in a case where a film consisting of a resin having a SP value of more than 10 is disposed, a mold release agent having a melting point of 60°C to 100°C can be applied between the film and the die. In any case, the temperature of the pair of dies can be set to 30°C to 80°C.

In the above-described production method, it is possible to use the molding of polyurethane in the mold or the like, in which a mixed solution (foaming stock solution) consisting of the polyol component (A), the polyisocyanate component (B), the catalyst (C), the foam stabilizer (D), the foaming agent (E), and the anti-foaming agent (F) is injected into a mold and then demolding is after foaming and curing. From the viewpoint of securing dispersion stability, it is preferable that the anti-foaming agent (F) is added to the polyol component (A).

In a case where the polyurethane foam is produced using a film, the foaming stock solution consisting of the polyol component (A), the polyisocyanate component (B), the catalyst (C), the foam stabilizer (D), the foaming agent (E), and the anti-foaming agent (F) is injected into a mold in which a resin film is disposed in advance in a shape along the shape of the inner surface shape, on at least any one surface of the lower die or the upper die, whereby the polyurethane foam is molded in the mold to obtain a molded article. In a case where a film consisting of a resin having an SP value of 10 or less is used, the film is peeled off at the time of demolding or after demolding.

From the viewpoint that the number of steps of disposing the resin film in the mold each time and the resin film can be repeatedly used, it is more preferable that the resin film is fixed to the mold with an adhesive or the like, thereby being peeled off from the urethane foam during demolding. In addition, although the resin film is disposed on at least any one surface of the lower die or the upper die, the resin film may be disposed on both surfaces in order to increase the sound insulation performance.

The NCO INDEX (an index obtained by multiplying a molar ratio of NCO to active hydrogen by 100) during the mixing and foaming of all isocyanate groups in the polyisocyanate composition and all active hydrogen groups in the active hydrogen group-containing compound including water is preferably 70 to 140, and it is more preferably 70 to 120 as a favorable range of a molding cycle.

In a case where the NCO INDEX is less than 70, the closed cell property of the foam is excessively increased, and in a case where the NCO INDEX is more than 120, there is a concern that, for example, the molding cycle may be extended due to the remaining of unreacted isocyanates for a long time, and the foam may collapse during foaming due to a delay in an increase in molecular weight.

In the production of the mold foam, the mold temperature at the time of injecting the foaming stock solution into the mold is usually 30°C to 80°C and preferably 45°C to 70°C. In a case where the mold temperature at the time of injecting the foaming stock solution into the mold is lower than 30°C, there is a concern that the production cycle may be extended due to a decrease in reaction rate. On the other hand, in a case where the mold temperature is higher than 80°C, there is a concern that the foam may collapse during foaming due to excessive promotion of a reaction between water and an isocyanate with respect to a reaction between a polyol and an isocyanate.

In a case of foaming and curing the above-described foaming stock solution, the curing time is preferably 10 minutes or less and more preferably 7 minutes or less in consideration of a general production cycle of a mold foam.

In a case of producing the mold foam, each of the above-described components can be mixed using a high-pressure foaming machine, a low-pressure foaming machine, or the like, as in the case of a normal mold foam.

It is preferable that the isocyanate component and the polyol component are mixed immediately before foaming. The other components can be mixed with the isocyanate component or the polyol component in advance within a range that does not affect the storage stability and the temporal change in reactivity of the raw materials. The mixture may be used immediately after mixing or may be stored and then a required amount thereof may be appropriately used as necessary. In a case of a foaming device that is capable of simultaneously introducing components of more than two components into a mixing unit, a polyol, a foaming agent, an isocyanate, a catalyst, a foam stabilizer, an anti-foaming agent, and the like can also be individually introduced into the mixing unit.

In addition, the mixing method may be any of dynamic mixing in which mixing is carried out in a machine head mixing chamber of a foaming machine or static mixing in which mixing is carried out in a liquid feeding pipe, or both may be used in combination. The mixing of a gaseous component such as a physical foaming agent and a liquid component is often carried out by static mixing, and the mixing of components that can be stably stored as liquids is often carried out by dynamic mixing. The foaming device that is used in the present invention is preferably a high-pressure foaming device that does not require solvent cleaning of the mixing unit.

A mixed solution obtained by such mixing is injected into a mold and then foamed and cured, and then demolding is carried out. In order to smoothly carry out the demolding, it is also suitable to apply a mold release agent in advance onto the mold surface on which the resin film is not disposed.

As the mold release agent, a mold release agent obtained by dissolving, in an organic solvent, a hydrocarbon-based wax, silicone, or fluorine, which is a main component, or a mold release agent dispersed in water using an emulsifying agent can be used. The melting point of the mold release agent is preferably 60°C to 100°C and more preferably 70°C to 100°C. In a case where the melting point of the mold release agent is too low with respect to the mold temperature, there is a concern that the main component of the melted mold release agent may mix with a mixed solution of the polyol component and the isocyanate component, and cell roughening of the urethane foam may occur. In a case where the melting point of the mold release agent is too high with respect to the mold temperature, there is a concern that the hole opening ratio of the surface of the urethane foam may be high.

The product after demolding can be used as it is; however, it is preferable to break the cell membrane of the foam under compression or under reduced pressure by a publicly known method, thereby stabilizing the appearance and dimensions of the product thereafter.

The resin film preferably has an SP value of 10 or less, and more preferably has an SP value of 9.5 or less. In a case where the SP value exceeds the upper limit, the adhesiveness to the polyurethane foam is increased, and there is a concern that the film cannot be peeled off at the time of demolding or after demolding. As the resin, for example, polyethylene, polypropylene, an ethylene-$\alpha$-olefin copolymer such as an ethylene-propylene copolymer, an ethylene-butene-1 copolymer, an ethylene-4-methyl-1-pentene copolymer, an ethylene-hexene copolymer, and an ethylene-octene copolymer, a polyolefin-based resin such as an ethylene-vinyl acetate copolymer, an ethylene-acrylic acid copolymerization, an ethylene-methyl methacrylate copolymer, and an ethylene-vinyl acetate-methyl methacrylate copolymer, polystyrene, polytetrafluoroethylene (Teflon (registered trademark)), or the like can be used; however, among these, a polyethylene resin or a polypropylene resin is preferably used because of low cost.

The thickness of the film is preferably 1 to 250 $\mu$m. In a case where the thickness of the film is less than 1 $\mu$m, there is a concern that workability in a case of being disposed on the mold is deteriorated, and in a case where the thickness of the film is more than 250 $\mu$m, there is a concern that moldability of the polyurethane foam is deteriorated.

The hardness of the polyurethane foam obtained by the above-described production method is preferably 20 to 100 points and more preferably 40 to 100 points in terms of the Asker C hardness measured according to JIS K 7312. In a case where the C hardness is less than 20, there is a concern that sufficient sound absorption and sound insulation properties in the low and middle frequency ranges cannot be obtained. In addition, the air permeability of the polyurethane foam obtained by the above production method, which is measured according to JIS K 6400, is preferably 0 to 2.0 cm$^3$/cm$^2$/sec and more preferably 0 to 1.5 cm$^3$/cm$^2$/sec. In a case where the air permeability exceeds the upper limit, there is a concern that sufficient sound insulation properties in the low and middle frequency ranges cannot be obtained.

In addition, the thickness of the thinnest portion of the polyurethane foam obtained by the above-described production method is preferably 5.0 to 50 mm and more preferably 5.0 to 30 mm. In a case where the thickness of the thinnest portion is less than 5.0 mm, a sufficient sound absorption and sound insulation effect may not be obtained in the low and middle frequency ranges, and in a case where the thickness exceeds the upper limit, there is a concern that a sufficient space cannot be secured in a transportation machine, a building, or the like.

The hole opening ratio of the surface layer of at least any one of upper and lower surfaces with respect to the foaming direction is preferably 0% to 1.0%. In a case where the hole opening ratio exceeds 1.0%, there is a concern that the sound absorption and sound insulation effect in the low and middle frequency ranges may be reduced. In addition, the root mean square surface roughness described in JIS B 0601:1994, on the same surface as the surface on which the hole opening ratio is measured is preferably 0.01 to 0.30 $\mu$m. In a case where the root mean square surface roughness exceeds the upper limit, there is a concern that the sound absorption and sound insulation effect in the low and middle frequency ranges may be reduced.

According to the above-described production method for a polyurethane foam, it is possible to suitably obtain a polyurethane foam in which, in a vertical incident sound absorption coefficient measuring method in accordance with JIS A 1405-2: 2007, a sound absorption coefficient at 800 Hz is 0.4 or more under sample conditions of a diameter of 100 mm and a thickness of 10 mm, and in a vertical incident sound transmission loss measurement in accordance with AST M E2611, a simple average value of transmission losses at 800 to 1,250 Hz is 15 dB or more under sample conditions of a diameter of 100 mm and a thickness of 10 mm. Here, the sound insulation performance can be evaluated by a vertical incident sound transmission loss measurement, and the simple average value of the transmission loss at 800 to 1,250 Hz means a simple average value of the vertical incident transmission losses at 800 Hz, 1,000 Hz, and 1,250 Hz.

The cells of the polyurethane foam are coarsened by the anti-foaming agent, whereby a high sound absorption and sound insulation effect can be obtained. This is considered to be because in a case where the cells are coarsened, the membrane vibration on the outer layer surface is effectively exhibited to enhance the sound absorption and sound insulation properties at the specific frequency, and a Helmholtz resonator type sound absorbing mechanism is also exhibited in the polyurethane foam, whereby the sound absorbing effect at the specific frequency is enhanced. The Helmholtz resonator is a resonator in which air inside a container having an opening portion acts as a spring, and the air resonates with vibration at a specific frequency that is determined by the internal volume of the container, the area of the opening portion, and the like, and the Helmholtz resonator violently vibrates the air guided inside the container by the above-described resonance phenomenon and dissipates the energy of noise through friction loss to absorb sound.

In the present invention, it is considered that a high sound absorbing effect is exhibited by regarding the coarse cells as a container, and regarding the relatively small cells other than the coarse cells, the holes present in the foam skin layer formed during the production, or the open hole portions of the film, as opening portion of the container, and then adjusting the coarse cell size (the internal volume of the container) such that the resonance frequency of the Helmholtz resonator is 1,000 Hz to 3,500 Hz.

Examples

Hereinafter, the present invention will be described in more detail based on Examples and Comparative Examples. However, the present invention is not limited to the following Examples. It is noted that "parts" and "%" in the text are based on mass unless otherwise specified.

(Examples 1 to 9 and Comparative Examples 1 to 4)

[Preparation of polyol composition]

A reactor equipped with a stirrer, a cooling pipe, a nitrogen introduction pipe, and a thermometer was subjected to nitrogen replacement. Then 40 g of a polyol 1, 60 g of a polyol 2, 1.0 g of a polyol 3, 0.5 g of a catalyst 1, 0.03 g of a catalyst 2, 1.0 g of a foam stabilizer 1, 0.7 g of an anti-foaming agent 1, and 3.8 g of water were charged thereinto, and the resultant mixture was stirred at 23°C for 0.5 hours to obtain a polyol composition (P-1). As shown in Table 1, other polyol compositions (P-2 and P-3) were also prepared in the same manner as in P-1.

[Conditions for molding in mold]

Among the raw materials shown in Table 1, the liquid temperatures of the isocyanate composition and a mixture (polyol composition) of all the raw materials other than the isocyanate composition were adjusted to 24°C to 26°C. A predetermined amount of a polyisocyanate component was added to the polyol composition, and the resultant mixture was mixed with a mixer (7,000 rotations per minute) for 7 seconds and then injected into a mold to foam a polyurethane foam. It is noted that in Examples and Comparative Examples, the film and the mold release agent indicated by "O" shown in Table 1 were used (those without being indicated by "O" are the film and the mold release agent that are not used).

Mold temperature: 50°C to 65°C
Mold shape:

$$400 \text{ mm} \times 400 \text{ mm} \times 10 \text{ mm}$$

Mold material: aluminum
Curing time: 5 minutes

Disposition of film: A resin film was disposed on the upper die of the mold in advance [Examples 1 to 7 and Comparative Example 2].

[Physical properties of foam]

The physical properties of the foam were measured as follows.

· A foam from which a film could be peeled off after demolding was subjected to measurement after peeling (Examples 1 to 5).
· A foam from which a film was difficult to be peeled off after demolding was subjected to measurement without peeling (Examples 6 and 7 and Comparative Example 2).
· A foam in which a film was not disposed was subjected to measurement in a state where the film was not disposed (Examples 8 and 9 and Comparative Examples 1, 3, and 4).

· In Comparative Example 2, after demolding, a laminated film portion on the surface was subjected to a thermal needle processing treatment (was perforated) to forcedly open the laminated film portion, and then measurement was carried out.

[Table 1]

| | | | Example | | | | | | | | | Comparative Example | | | |
|---|---|---|---|---|---|---|---|---|---|---|---|---|---|---|---|
| | | | 1 | 2 | 3 | 4 | 5 | 6 | 7 | 8 | 9 | 1 | 2 | 3 | 4 |
| | Isocyanate composition No. | | I-1 | I-1 | I-1 | I-1 | I-1 | I-1 | I-1 | I-2 | I-2 | I-1 | I-1 | I-2 | I-1 |
| Polyol composition | Polyisocyanate component (B) — Isocyanate 1 | | 100 | 100 | 100 | 100 | 100 | 100 | 100 | | | 100 | 100 | | 100 |
| | Polyisocyanate component (B) — Isocyanate 2 | | | | | | | | | 100 | 100 | | | 100 | |
| | Polyol composition No. | | P-1 | P-2 | P-1 | P-1 | P-1 | P-1 | P-1 | P-3 | P-3 | P-1 | P-1 | P-3 | P-1 |
| | Polyol component (A) — Polyol 1 | | 40 | 70 | 40 | 40 | 40 | 40 | 40 | 60 | 60 | 40 | 40 | 60 | 40 |
| | Polyol component (A) — Polyol 2 | | 60 | 30 | 60 | 60 | 60 | 60 | 60 | | | 60 | 60 | | 60 |
| | Polyol component (A) — Polyol 3 | | 1.0 | 1.0 | 1.0 | 1.0 | 1.0 | 1.0 | 1.0 | 2.0 | 2.0 | 1.0 | 1.0 | 2.0 | 1.0 |
| | Polyol component (A) — Polyol 4 | | | | | | | | | 40 | 40 | | | 40 | |
| | Catalyst (C) — Catalyst 1 | | 0.50 | 0.50 | 0.50 | 0.50 | 0.50 | 0.50 | 0.50 | 0.70 | 0.70 | 0.50 | 0.50 | 0.70 | 0.50 |
| | Catalyst (C) — Catalyst 2 | | 0.03 | 0.03 | 0.03 | 0.03 | 0.03 | 0.03 | 0.03 | 0.10 | 0.10 | 0.03 | 0.03 | 0.10 | 0.03 |
| | Foam stabilizer (D) — Foam stabilizer 1 | | 1.0 | 1.0 | 1.0 | 1.0 | 1.0 | 1.0 | 1.0 | 0.5 | 0.5 | 1.0 | 1.0 | 0.5 | 1.0 |
| | Anti-foaming agent (F) — Anti-foaming agent 1 | | 0.7 | 0.7 | 0.7 | 0.7 | 0.7 | 0.7 | 0.7 | 0.1 | 0.1 | 0.7 | 0.7 | 0.1 | 0.7 |
| | Foaming agent (E) — Water | | 3.8 | 3.8 | 3.8 | 3.8 | 3.8 | 3.8 | 3.8 | 2.0 | 2.0 | 3.8 | 3.8 | 2.0 | 3.8 |
| Amount of anti-foaming agent in composition for molding polyurethane foam | | (% by mass) | 0.44 | 0.44 | 0.44 | 0.44 | 0.44 | 0.44 | 0.44 | 0.10 | 0.10 | 0.44 | 0.44 | 0.10 | 0.44 |
| Mold release agent | Mold release agent 1 | | ○ | ○ | ○ | ○ | ○ | ○ | ○ | | | ○ | ○ | | ○ |
| | Mold release agent 2 | | | | | | | | | ○ | | | | | |
| | Mold release agent 3 | | | | | | | | | | ○ | | | | |
| | Mold release agent 4 | | | | | | | | | | | | | ○ | |
| Melting point of mold release agent (°C) | | | 96 | 96 | 96 | 96 | 96 | 96 | 96 | 74 | 84 | 96 | 96 | 50-60 | 96 |
| Temperature of metal mold (°C) | | | 60 | 60 | 60 | 60 | 60 | 60 | 60 | 50 | 50 | 60 | 60 | 60 | 40 |
| NCO INDEX | | | 100 | 100 | 100 | 100 | 100 | 100 | 100 | 80 | 80 | 100 | 100 | 80 | 100 |
| Film | Film 1 | | ○ | ○ | | | | | | | | | | | |
| | Film 2 | | | | ○ | | | | | | | | | | |
| | Film 3 | | | | | ○ | | | | | | | | | |
| | Film 4 | | | | | | ○ | | | | | | | | |
| | Film 5 | | | | | | | ○ | | | | | | | |
| | Film 6 | | | | | | | | ○ | | | | ○ | | |
| | Film thickness | (μm) | 20 | 20 | 50 | 30 | 30 | 30 | 30 | - | - | - | 30 | - | - |
| | SP value of film | ((cal/cm³)^{1/2}) | 7.9 | 7.9 | 8.0 | 8.0 | 9.4 | 10.0 | 10.1 | - | - | - | 10.1 | - | - |
| Physical properties of foam | Apparent density | (kg/m³) | 153 | 151 | 150 | 150 | 146 | 145 | 148 | 110 | 108 | 152 | 148 | 109 | 152 |
| | Urethane foam thickness | (mm) | 10 | 10 | 10 | 10 | 10 | 10 | 10 | 10 | 10 | 10 | 10 | 10 | 10 |
| | C hardness | (-) | 63 | 30 | 58 | 68 | 70 | 65 | 66 | 21 | 23 | 76 | 66 | 22 | 76 |
| | Air permeability | (cm³/cm²/sec) | 0.5 | 0.5 | 0.3 | 0.4 | 0.5 | 0.0 | 0.0 | 2.0 | 0.8 | 7.4 | 5.0 | 4.5 | 16.0 |
| | Average cell diameter | (μm) | 5800 | 5600 | 4800 | 4600 | 4500 | 5100 | 4300 | 2100 | 2000 | 4000 | 4300 | 2500 | 4200 |
| | Hole opening ratio of outer layer surface | (%) | 0.4 | 0.4 | 0.4 | 0.5 | 0.4 | 0.0 | 0.0 | 0.1 | 0.1 | 3.0 | 2.8 | 0.1 | 43.0 |
| | Root mean square surface roughness | (μm) | 0.05 | 0.05 | 0.06 | 0.08 | 0.06 | 0.15 | 0.28 | 0.05 | 0.08 | 0.34 | 0.42 | 0.41 | 0.43 |
| | Area ratio of cells having a diameter of 5,000 μm or more | (%) | 66.0 | 61.0 | 54.0 | 52.0 | 51.0 | 58.0 | 48.0 | 21.0 | 22.0 | 45.0 | 48.0 | 27.0 | 45.0 |
| | Sound absorption coefficient at 800 Hz | (-) | 0.47 | 0.41 | 0.46 | 0.43 | 0.45 | 0.40 | 0.41 | 0.40 | 0.41 | 0.13 | 0.24 | 0.25 | 0.11 |
| | Average transmission loss at 800~1,000 Hz | (dB) | 21 | 17 | 22 | 21 | 21 | 18 | 17 | 16 | 16 | 6 | 5 | 17 | 3 |
| Moldability | | | ○ | ○ | ○ | ○ | ○ | ○ (Difficult to peel off film) | ○ (Difficult to peel off film) | ○ | ○ | ○ | ○ (Difficult to peel off film) | × (Cell roughening) | ○ |

[Raw materials used]

· Polyol 1: A polyoxyethylene polyoxypropylene polyol having an average number of functional groups of 3.0 and a hydroxyl group value of 33 (mgKOH/g), EXCENOL 823 (product name) manufactured by AGC Inc.
· Polyol 2: A polymer polyol having an average number of functional groups of 3.0 and a hydroxyl group value of 24 (mgKOH/g), EXCENOL 923 (product name) manufactured by AGC Inc.
· Polyol 3: A polyoxyethylene polyoxypropylene polyol in which the average number of functional groups is 4.0, the hydroxyl group value is 28 (mgKOH/g), and the oxyethylene unit in the polyether polyol is 80% by mass, manufactured by Tosoh Corporation, NEF-024 (product name)
· Polyol 4: An unpurified castor oil (URIC H-24 manufactured by ITOH OIL CHEMICALS CO., LTD.) in which the average number of functional groups is 2.7 and the hydroxyl group value is 160 (mgKOH/g)
· Catalyst 1: A dipropylene glycol solution of 33% triethylenediamine (manufactured by Tosoh Corporation, product name: TEDA L-33)
· Catalyst 2: A dipropylene glycol solution of 70% of bis(2-dimethylaminoethyl)ether (manufactured by Tosoh Corporation, product name: TOYOCAT ET)
· Foam stabilizer 1: A silicone-based foam stabilizer (manufactured by Momentive Performance Materials Inc., product name: L-5309J)
· Anti-foaming agent 1: GC-302SS (product name), a silicone-based anti-foaming agent manufactured by NISSIN KAGAKU KENKYUSHO CO., LTD.
· Isocyanate 1: A polyphenylene polymethylene polyisocyanate (manufactured by Tosoh Corporation, product name: CEF-549) having an MDI content of 75% by mass and an isomer content of 38.4% by mass
· Isocyanate 2: A polyphenylene polymethylene polyisocyanate (manufactured by Tosoh Corporation, product name: CEF-538) having an MDI content of 70% by mass and an isomer content of 17.7% by mass

Mold release agent 1: A hydrocarbon-based wax diluted with an organic solvent (manufactured by CHUKYO YUSHI CO., LTD., K-878)

· Mold release agent 2: A water-dispersible type hydrocarbon-based wax (manufactured by CHUKYO YUSHI CO., LTD., S-509)

· Mold release agent 3: A water-dispersible type hydrocarbon-based wax (manufactured by CHUKYO YUSHI CO., LTD., M-975)

· Mold release agent 4: A hydrocarbon-based wax diluted with an organic solvent (manufactured by KONISHI Co., Ltd., UR-658)

· Film 1: A high-density polyethylene film having a film thickness of 20 $\mu$m (manufactured by Tosoh Corporation, Nipolon Hard FW10)

· Film 2: A low-density polyethylene film having a film thickness of 50 $\mu$m (manufactured by Tosoh Corporation, Petrocene 231F)

Film 3: A polypropylene film having a film thickness of 30 $\mu$m (manufactured by Toray Industries, Inc., TORAYFAN (registered trademark))

· Film 4: A polystyrene film having a film thickness of 30 $\mu$m (manufactured by Ohishi Sangyo Co., Ltd., Styrofan)

· Film 5: A polyvinyl chloride film having a film thickness of 30 $\mu$m (manufactured by Lonseal Corporation, Lonace NP)

· Film 6: A thermoplastic polyurethane elastomer film having a film thickness of 30 $\mu$m (manufactured by Okura Industrial Co., Ltd., SILKLON ET85).

[Evaluation of moldability]

In Table 1, the evaluation of "moldability" of "○" means that the polyurethane foam could be molded without the occurrence of the collapse in which the urethane foam reaches the maximum height and then sinks significantly or the phenomenon in which the generated urethane foam shrinks immediately after foaming or after curing, "difficult to peel off film" means that the adhesiveness to the urethane foam is high and thus it is difficult to peel off the film after demolding, and "cell roughening" which is the evaluation of "×" means that the surface state of the foam is disturbed in the foaming process of the urethane foam and the hole opening ratio of the surface is increased.

[Apparent density]

Determination was carried out according to the method described in JIS K 6400.

[C hardness]

Measurement was carried out using a rubber hardness meter (Asker C type) described in JIS K 7312.

[Air permeability]

Measurement was carried out according to the method described in JIS K 6400.

[Average cell diameter]

The average cell diameter of each polyurethane foam molded body was determined by cutting out a 10 mm-thick molded body obtained by molding, into a disk shape having a diameter of 28.8 mm, capturing an image for the foam side surface in a field of view of a vertical length of 10 mm and a horizontal length of 16.3 mm using a microscope equipped with a lens MTL5518C-034-01 manufactured by MORITEX Corporation, measuring cell diameters of a predetermined number of cells present in the field of view, and simply averaging the cell diameters.

[Hole opening ratio of surface]

The hole opening ratio of each polyurethane foam molded body was obtained as follows: a 10 mm-thick molded body obtained by molding was cut out into a disk shape having a diameter of 28.8 mm, an image having a diameter of 28.8 mm was captured for a surface in contact with an upper die of the mold during molding using a microscope equipped with a telecentric lens MM014-HR110-5M manufactured by MORITEX Corporation, the image was binarized into an open hole portion and a surface layer portion other than the open hole portion using software "ImageJ", and the sum of the areas of the open hole portions was calculated, and then a calculation was carried out based on the following calculation expression.

Hole opening ratio = (sum of areas of open hole portions/sample area) $\times$ 100 $\cdots$ (Expression).          (Expression)

[Root mean square surface roughness]

Measurement was carried out on the same surface as the surface on which the above-described hole opening ratio had been measured, using a laser microscope (VK-9500/VK-9510), manufactured by KEYENCE CORPORATION, and an objective lens magnification ($20\times$), and the measurement result was evaluated as a root mean square surface roughness described in JIS B 0601: 1994.

[Area ratio of cells having diameter of 5,000 $\mu$m or more]

The area ratio of cells having a diameter of 5,000 $\mu$m or more in each polyurethane foam molded body was obtained by cutting out a 10 mm-thick molded body obtained by molding, into a disk shape having a diameter of 28.8 mm, capturing an image for the foam cross section in a field of view of a vertical length of 10 mm and a horizontal length of 16.3 mm using a microscope equipped with a lens MTL5518C-034-01 manufactured by MORITEX Corporation, measuring the area of cells having a diameter of 5,000 $\mu$m or more present in the field of view, and carrying out a calculation based on the following calculation expression.

Area ratio of cells having diameter of 5,000 $\mu$m or more = (sum of areas of cells having diameter of 5,000 $\mu$m or more/area of field of view) $\times$ 100 $\cdots$ (Expression).          (Expression)

[Sound absorption coefficient]

Based on the method described in JIS A 1405-2: 2007, the vertical incident sound absorption coefficient at 50 to 1,600 Hz was measured using an acoustic tube of Model 4206 manufactured by Brüel & Kjaer Japan Co., Ltd. The sound absorption coefficient was measured under a condition that a urethane foam having a diameter of 100 mm and a thickness of 10 mm was disposed such that the molding surface of the upper die of the mold faced the sound source side and an air layer was not provided behind the urethane foam.

[Transmission loss]

Based on the method described in AST M E2611, the vertical incident transmission loss at 12.5 to 1,600 Hz was measured using an acoustic tube of Model 4206 manufactured by Brüel & Kjaer Japan Co., Ltd. Regarding the measurement of the transmission loss, the measurement was carried out under a condition that a urethane foam having a diameter of 100 mm and a thickness of 10 mm was disposed such that the molding surface of the upper die of the mold faced the sound source side and an air layer was not provided behind the urethane foam.

[Surface state]

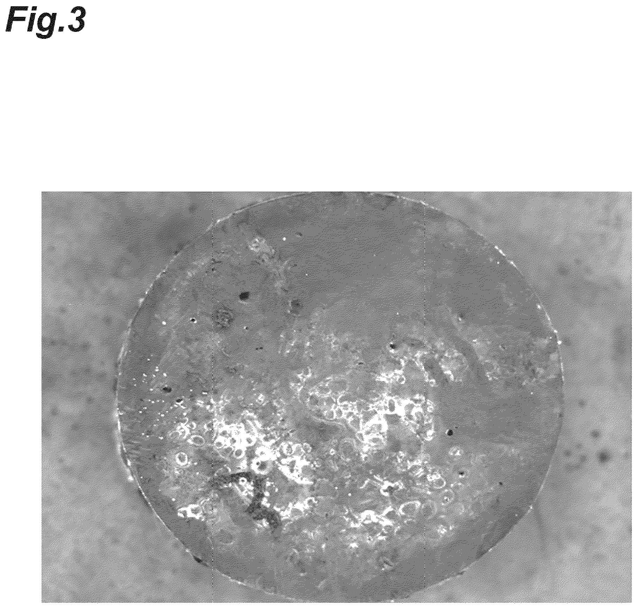

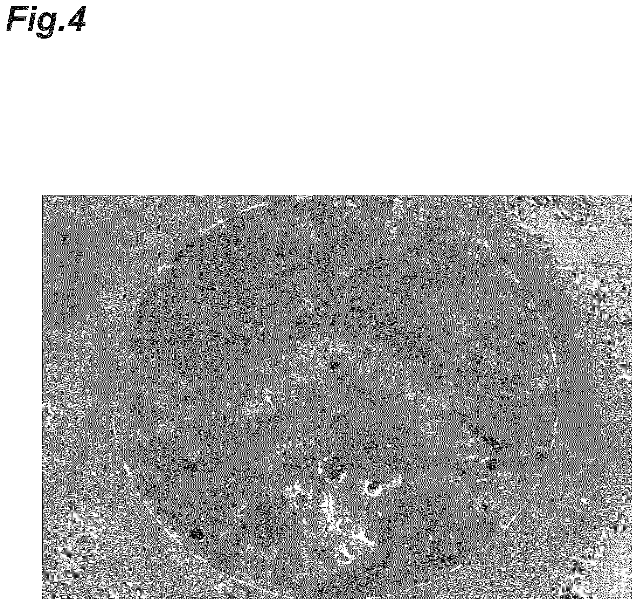

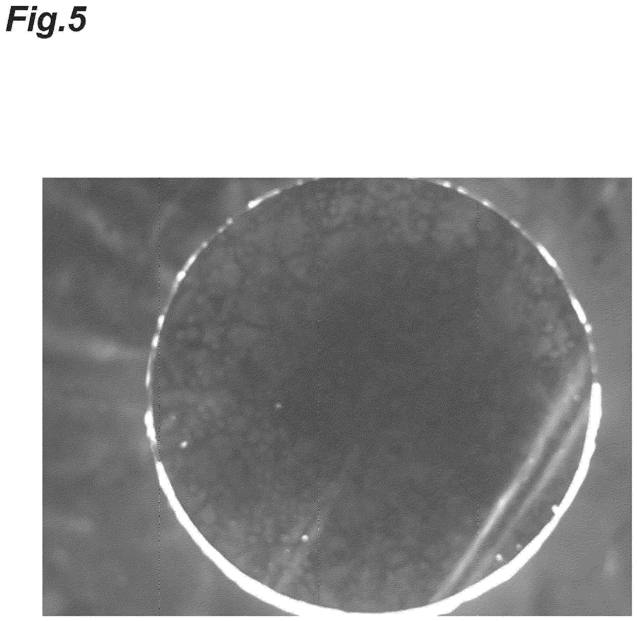

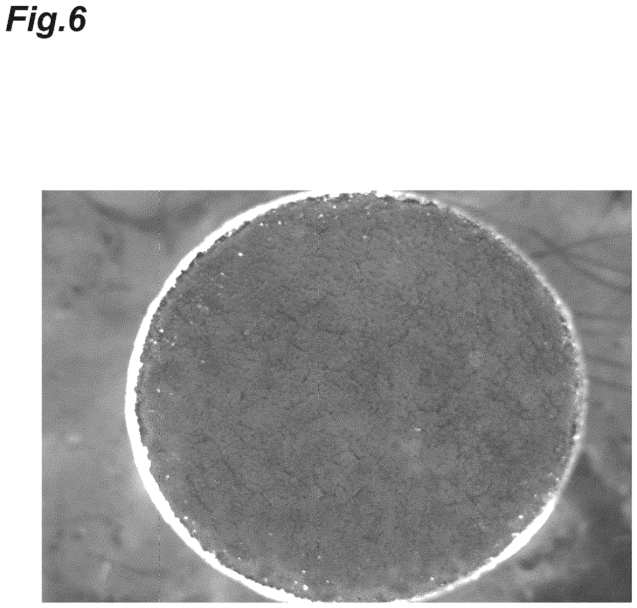

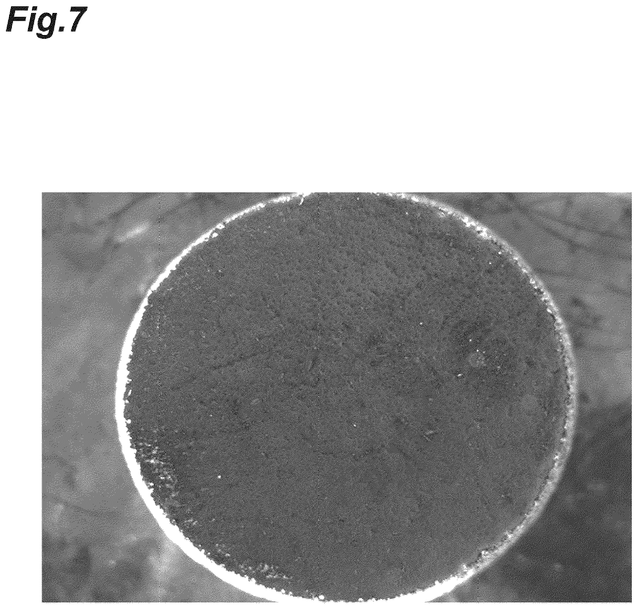

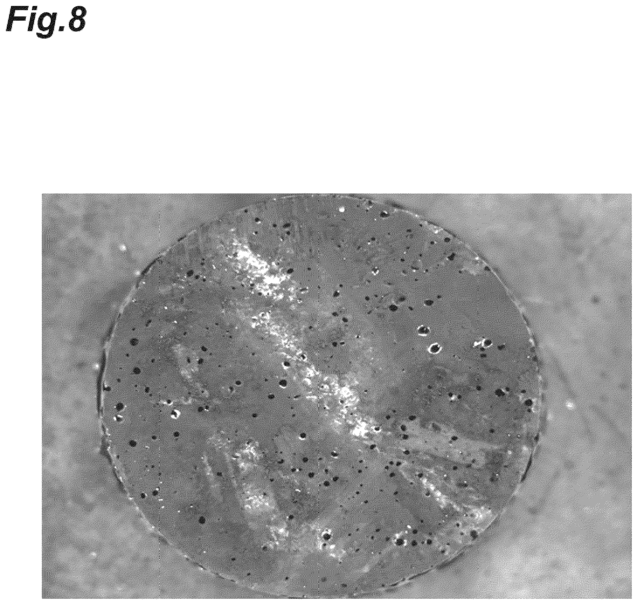

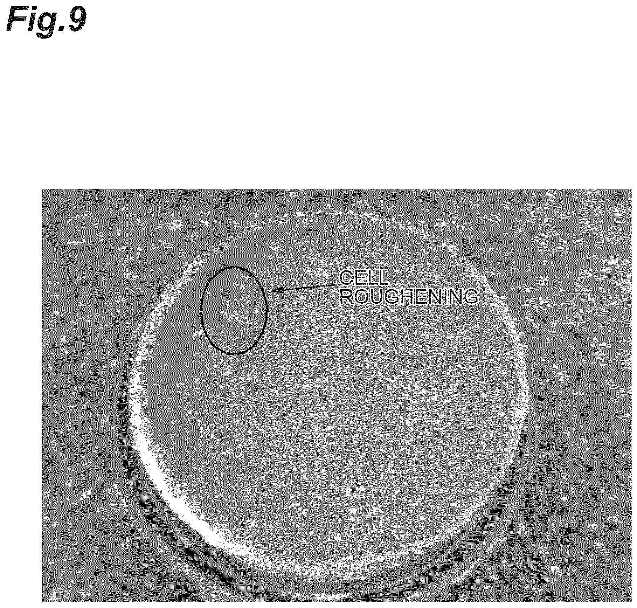

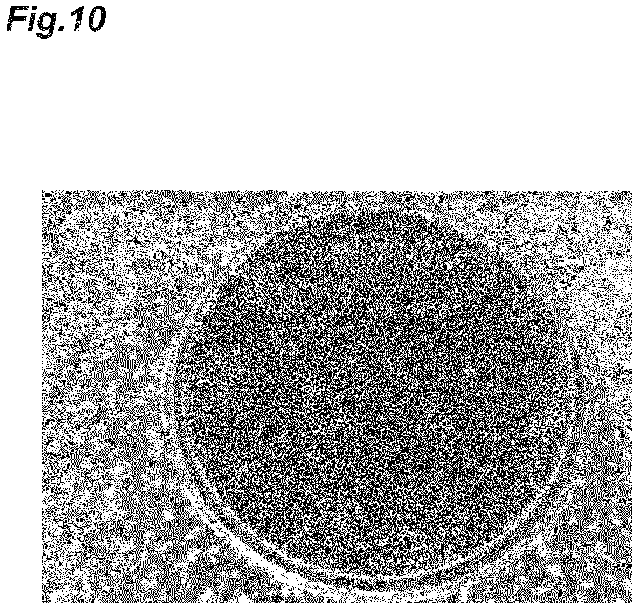

A 10 mm-thick molded body obtained by molding was cut out into a disk shape having a diameter of 28.8 mm, and a surface in contact with the upper die of the mold during molding was observed with an optical microscope. Images of Examples 1, 2, 7, 8, and 9 and Comparative Examples 1, 3, and 4 are shown in Fig. 3, Fig. 4, Fig. 5, Fig. 6, Fig. 7, Fig. 8, Fig. 9 and Fig. 10, respectively. The diameter of the polyurethane foam in the image is 28.8 mm.

As shown in Comparative Example 1 of Table 1, in a case where a film is not disposed in the mold, both the sound absorption coefficient at 800 Hz and the average transmission loss at 800 to 1,000 Hz are extremely low. In this case, the air permeability and the hole opening ratio are high, and the root mean square surface roughness is large as compared with Examples. As shown in Comparative Example 2, even in a case where a film is disposed in the mold, the air permeability and the hole opening ratio are high, the root mean square surface roughness increases, and both the sound absorption coefficient at 800 Hz and the average transmission loss at 800 to 1,000 Hz are extremely low in a case where a laminated film portion on the surface was subjected to a thermal needle processing treatment to be forcedly open. As shown in Comparative Example 3, in a case where the melting point of the mold release agent is too low with respect to the mold temperature, the melted main component mixes with a mixed solution of the polyol component and the isocyanate component, and cell roughening of the urethane foam occurs. As shown in Comparative Example 4, in a case where the melting point of the mold release agent is too high with respect to the mold temperature, the opening ratio of the surface of the urethane foam is high.

By comparing the above Examples and Comparative Examples, it is clear that in the present invention, a molded body having high sound absorption and sound insulation performance in the low and middle frequency ranges can be obtained even in a case where the thickness of the foam material (base material) is small, and thus the significance and remarkable excellence of the configuration of the present invention can be understood.

**Reference Signs List**

1: polyurethane foam
2: polyurethane foam main body
2a: principal surface
4: film
4a: principal surface

**Claims**

1. A polyurethane foam,

   wherein at least one of principal surfaces opposite to each other has a hole opening ratio of 0% to 1.0%, and the principal surface having the hole opening ratio has a root mean square surface roughness of 0.01 to 0.30 $\mu$m in accordance with JIS B 0601:1994, and the polyurethane foam has an air permeability of 0 to 2.0 cm$^3$/cm$^2$/sec in accordance with JIS K 6400.

2. The polyurethane foam according to Claim 1,
   wherein an Asker C hardness in accordance with JIS K 7312 is 20 to 100 points.

3. The polyurethane foam according to Claim 1,
   wherein the polyurethane foam has an average cell diameter of 2,000 $\mu$m or more and an area ratio of cells having a diameter of 5,000 $\mu$m or more is 20% or more.

4. The polyurethane foam according to Claim 1,
   wherein a thickness of a thinnest portion is 5.0 to 50 mm.

5. A production method for producing the polyurethane foam according to Claim 1,
   wherein in a state where a film consisting of a resin having an SP value of 10 or less is disposed on at least one inner surface of a pair of dies constituting a mold, the polyurethane foam is molded in the mold, and then the film is peeled off.

6. The production method according to Claim 5,
   wherein the resin having an SP value of 10 or less is a polyolefin resin.

7. The production method according to Claim 5,
   wherein the resin having an SP value of 10 or less is polyethylene or polypropylene.

8. The production method according to Claim 5,
   wherein a mold release agent having a melting point of 60°C to 100°C is applied between the film and the dies, and the molding in the mold is carried out.

9. A production method for producing the polyurethane foam according to Claim 1,
   wherein a mold release agent having a melting point of 70°C to 90°C is applied onto at least one inner surface of a pair of dies constituting a mold, a film is not disposed on a surface onto which the mold release agent is applied, and then the polyurethane foam is molded in the mold.

10. A production method for producing the polyurethane foam according to Claim 1,
    wherein in a state where a film consisting of a resin is disposed on at least one inner surface of a pair of dies constituting a mold, the polyurethane foam is molded in the mold.

11. The production method according to any one of Claims 5 to 10,
    wherein a temperature of the pair of dies is set to 30°C to 80°C, and then the polyurethane foam is molded in the mold.

**12.** The production method according to any one of Claims 5 to 10, wherein the polyurethane foam is obtained by reacting and foaming a composition for molding a polyurethane foam having a polyol component (A) and a polyisocyanate component (B) as constitutional components, and

the polyol component (A) comprises a catalyst (C), a foam stabilizer (D), and a foaming agent (E), at least one of the polyol component (A) or the polyisocyanate component (B) includes an anti-foaming agent (F), and a content of the anti-foaming agent (F) is 0.1% to 7.5% by mass with respect to a total amount of the composition for molding a polyurethane foam.

**13.** The production method according to Claim 12,

wherein the anti-foaming agent (F) is a silicone-based oil, and
a number average molecular weight of a polysiloxane component included in the silicone-based oil is 10,000 to 50,000.

**14.** The production method according to Claim 12,
wherein the anti-foaming agent (F) is included in the polyol component (A).

**15.** The production method according to Claim 12,

wherein the polyisocyanate component (B) includes 50% to 85% by mass of diphenylmethane diisocyanate, and
a total amount of 2,2'-diphenylmethane diisocyanate and 2,4'-diphenylmethane diisocyanate included in the diphenylmethane diisocyanate is 10% to 50% by mass with respect to a total amount of the diphenylmethane diisocyanate.

**16.** The production method according to Claim 12,
wherein the polyurethane foam to be produced has an average cell diameter of 2,000 $\mu$m or more and an area ratio of cells having a diameter of 5,000 $\mu$m or more is 20% or more.

**17.** The production method according to Claim 12,
wherein in the polyurethane foam to be produced, a thickness of a thinnest portion is 5.0 to 50 mm.

**Fig.1**

*Fig.2*

(a)

(b)

(c)

Fig.3

Fig.4

*Fig.5*

Fig.6

Fig.7

Fig.8

Fig.9

*Fig.10*

## INTERNATIONAL SEARCH REPORT

| International application No. |
| --- |
| **PCT/JP2023/026462** |

**A. CLASSIFICATION OF SUBJECT MATTER**

*B29C 44/34*(2006.01)i; *B29C 33/68*(2006.01)i; *B29C 44/14*(2006.01)i; *C08G 18/00*(2006.01)i; *C08G 18/76*(2006.01)i; *B29K 75/00*(2006.01)n; *C08G 101/00*(2006.01)n

FI: B29C44/34; B29C33/68; B29C44/14; C08G18/00 F; C08G18/00 L; C08G18/76 057; B29K75:00; C08G101:00

According to International Patent Classification (IPC) or to both national classification and IPC

**B. FIELDS SEARCHED**

Minimum documentation searched (classification system followed by classification symbols)

B29C44/00-44/60; B29C33/68; C08J9/00-9/42; C08G18/00-18/87;71/00-71/04;101/00; B29C39/00-39/44; B29K75/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2022-079417 A (TOSOH CORP.) 26 May 2022 (2022-05-26)<br>whole document, particularly, claims, examples 3, 7, 9, 10 | 1-17 |
| A | JP 8-245742 A (NHK SPRING CO., LTD.) 24 September 1996 (1996-09-24)<br>whole document, particularly, claims, comparative example 3 | 1-17 |
| A | JP 2017-142532 A (INOAC CORP.) 17 August 2017 (2017-08-17)<br>whole document, particularly, claims | 1-17 |
| A | JP 2020-013007 A (INOAC CORP.) 23 January 2020 (2020-01-23)<br>whole document, particularly, claims | 1-17 |

☐ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 September 2023** | **26 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/026462**

| Patent document cited in search report | | | Publication date (day/month/year) | Patent family member(s) | Publication date (day/month/year) |
|---|---|---|---|---|---|
| JP | 2022-079417 | A | 26 May 2022 | (Family: none) | |
| JP | 8-245742 | A | 24 September 1996 | (Family: none) | |
| JP | 2017-142532 | A | 17 August 2017 | (Family: none) | |
| JP | 2020-013007 | A | 23 January 2020 | (Family: none) | |

Form PCT/ISA/210 (patent family annex) (January 2015)

# EP 4 556 193 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10119220 A
- JP 2005263118 A

### Non-patent literature cited in the description

- **GUNTER OERTEL**. Polyurethane Handbook. HANSER, 1985, 161-233
- **KEIJI IWATA**. Polyurethane Resin Handbook. NIKKAN KOGYO SHIMBUN, LTD., 1987, 150-221
- **GUNTER OERTEL**. Polyurethane Handbook. HANSER, 1985, 184-191, 212-218
- **KEIJI IWATA**. Polyurethane Resin Handbook. NIKKAN KOGYO SHIMBUN, LTD., 1987, 160-166, 186-191
- **GUNTER OERTEL**. Polyurethane Handbook. HANSER, 1985, 223-233
- **KEIJI IWATA**. Polyurethane Resin Handbook. NIKKAN KOGYO SHIMBUN, LTD., 1987, 211-221
- **GUNTER OERTEL**. Polyurethane Handbook. HANSER, 1985, 234-313
- **KEIJI IWATA**. Polyurethane Resin Handbook. NIKKAN KOGYO SHIMBUN, LTD., 1987, 224-283
- **G. GEE**. *Trans. Inst. Rubber Ind*, 1943, vol. 18, 266
- **R. F. FEDORS**. *Polym. Eng. Sci*, 1974, vol. 14 (2), 147, 472
- **M. B. HUGLIN** ; **D. J. PASS**. *J. Appl. Polym. Sci*, 1968, vol. 12, 473
- **L. A. ERREDE**. *Macromolecules*, 1986, vol. 19, 1522
- **K. W. SUH** ; **J. M. CORBETT**. *J. Appl. Polym. Sci*, 1968, vol. 12, 2359
29